# EUROPEAN PATENT APPLICATION

(11) **EP 4 290 206 A1**
(43) Date of publication of application: **13.12.2023**
(21) Application number: 22905482.0
(22) Date of filing: 02.06.2022
(51) Int. Cl.: G01M 13/00, G01N 3/58, E01C 23/088

(54) **MILLING CUTTER TESTING METHOD, TESTING SYSTEM, ELECTRONIC DEVICE, AND MILLING MACHINE**

(30) Priority: 18.04.2022 CN 202210404019
(71) Applicant: Hunan Sany Zhongyi Machinery Co., Ltd., High-tech Zone Yiyang, Hunan 413062 (CN)
(72) Inventor: XIA, Yifan, Yiyang, Hunan 413062 (CN); MA, Jian, Yiyang, Hunan 413062 (CN); TANG, Jian, Yiyang, Hunan 413062 (CN)
(74) Representative: Rüger Abel Patentanwälte PartGmbB
(86) International application number: PCT/CN2022/096749
(87) International publication number: WO 2023/201855

(57) **Abstract**

The present application relates to the technical field of construction machinery, and relates to a method for detecting a milling cutter, a detection system, an electronic equipment, and a milling machine. The method for detecting the milling cutter includes: obtaining torque information of a milling motor; determining sub-torque information corresponding to each cutter area at a milling rotor according to the torque information of the milling motor; and determining a wear cutter area that reaches a cutter wear limit according to the sub-torque information. According to the technical solution of the present application, the torque of the milling cutter in different cutter areas on the milling rotor in the operation state is used to determine the wear degree of the cutter, which can effectively identify the cutter area that has reached the wear limit and realize partition detection with higher accuracy. In addition, detection can be finished by the existing device of the milling machine without the special detection equipment, which is conducive to reducing the overall cost of the milling machine.

## Description

### CROSS-REFERENCE TO RELATED APPLICATIONS

This application claims priority to Chinese Patent Application No. 202210404019.7, filed on April 18, 2022, and titled "METHOD FOR DETECTING MILLING CUTTER, DETECTION SYSTEM, ELECTRONIC EQUIPMENT, AND MILLING MACHINE", the entire contents of which are incorporated herein by reference.

### TECHNICAL FIELD

The present application relates to the technical field of construction machinery, and in particular to a method for detecting a milling cutter, a detection system, an electronic equipment, and a milling machine.

### BACKGROUND

The milling machine mainly uses the milling cutter of the milling rotor to cut the pavement. The milling operation quality will obviously decrease after certain wear exists in the milling cutter. Thus, the wear degree of the milling cutter needs to be detected.

### SUMMARY

The present application provides a method for detecting a milling cutter, a detection system, an electronic equipment, and a milling machine.

The present application provides a method for detecting a milling cutter applied in the milling machine which has the milling rotor and the milling motor. The method for detecting the milling cutter includes: operation S 100, obtaining torque information of a milling motor; operation S200, determining sub-torque information corresponding to each cutter area at a milling rotor according to the torque information of the milling motor; and operation S300, determining a wear cutter area that reaches a cutter wear limit according to the sub-torque information. The milling rotor and the milling motor are in a transmission connection, and the milling rotor includes a plurality of cutter areas distributed sequentially along a periphery of the milling rotor.

The above -mentioned technical solutions of the present application have following beneficial effects.

The torque of the milling cutter in different cutter areas on the milling rotor in the operation state is used as the detection data to determine the wear degree of the cutter, which can effectively identify the cutter area that has reached the wear limit and realize partition detection with higher accuracy. In addition, detection can be finished by the existing device of the milling machine without the special detection equipment, which is conducive to reducing the overall cost of the milling machine.

### BRIEF DESCRIPTION OF THE DRAWINGS

FIG. 1 is a schematic flowchart of a method for detecting a milling cutter according to an embodiment of the present application.
FIG. 2 is a schematic flowchart of the method for detecting the milling cutter according to an embodiment of the present application.
FIG. 3 is a schematic flowchart of the method for detecting the milling cutter according to an embodiment of the present application.
FIG. 4 is a schematic flowchart of the method for detecting the milling cutter according to an embodiment of the present application.
FIG. 5 is a schematic flowchart of the method for detecting the milling cutter according to an embodiment of the present application.
FIG. 6 is a schematic view of a milling rotor in an initial state according to an embodiment of the present application.
FIG. 7 is a schematic view of the milling rotor according to an embodiment of the present application.
FIG. 8 is a schematic flowchart of the method for detecting the milling cutter according to an embodiment of the present application.
FIG. 9 is a schematic flowchart of the method for detecting the milling cutter according to an embodiment of the present application.
FIG. 10 is a schematic block diagram of a detection system according to an embodiment of the present application.
FIG. 11 is a schematic view of a milling machine according to an embodiment of the present application.
FIG. 12 is a schematic block diagram of an electronic equipment according to an embodiment of the present application.
FIG. 13 is a schematic block diagram of a milling machine according to an embodiment of the present application.

### Description of reference numbers:

1, milling machine; 10, milling machine body; 11, detection system; 111, driving wheel; 112, driving motor; 12, milling rotor; 13, milling motor; 14, controller; 15, inform device; 2, electronic equipment; 21, processor; 22, memory.

### DETAILED DESCRIPTION OF THE EMBODIMENTS

To better understand the above purposes, characteristics, and advantages of the present application, the technical solutions will be described in detail below with reference to the accompanying drawings and the embodiments of the present application. It should be noted that embodiments and characteristics in the embodiments of the present application can be combined with each other in the case of non-conflict.

Many specific details are illustrated in the following description, to fully understand the present application. However, the present application can also be implemented by other methods different from embodiments described here. Therefore, the scope of the present application is not limited by specific embodiments described below.

The technical solutions of the present application provide some embodiments of the method for detecting the milling cutter, the detection system, the electronic equipment, the milling machine, and the readable storage medium in the following.

The method for detecting the milling cutter can be applied to the milling machine or other operation machines that have the operation requirements of detecting the wear state of the milling cutter. For the description convenience, the method for detecting the milling cutter of the present application which is applied to the milling machine will be used as an example and will be described in the following.

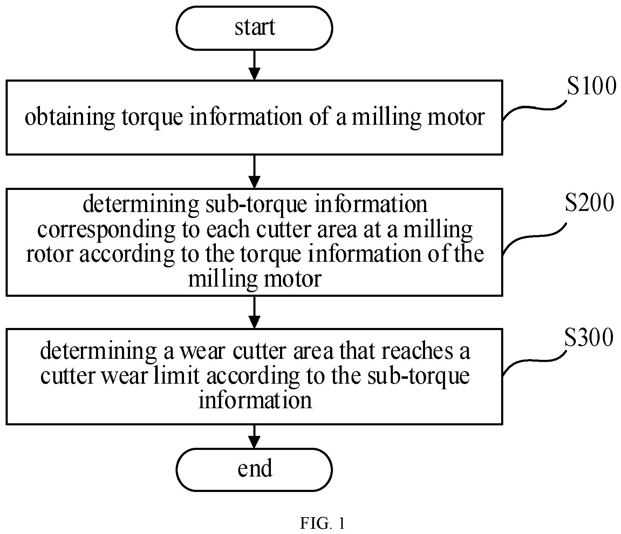

In some embodiments of the present application, as shown in FIG. 1, the method for detecting the milling cutter includes following operations.

Operation S 100, obtaining torque information of a milling motor.

Operation S200, determining sub-torque information corresponding to each cutter area at a milling rotor according to the torque information of the milling motor.

Operation S300, determining a wear cutter area that reaches a cutter wear limit according to the sub-torque information.

The milling machine includes the milling rotor and the milling motor. The milling rotor and the milling motor are in a transmission connection, and the milling rotor includes a plurality of cutter areas distributed sequentially along a periphery of the milling rotor.

In this embodiment, when being in the milling operation, the milling rotor will be detected in the operations S100 to S300. In the operation S100, the torque information of the milling motor can be obtained to provide data preparation for subsequent operations. In the operation S200, the torque information of the milling motor is analyzed to obtain the sub-torque information corresponding to each cutter area at the milling rotor, as a basis for determining whether the cutter area reaches the wear limit. In the operation S300, the sub-torque information corresponding to each cutter area is analyzed to determine the wear cutter area that reaches the cutter wear limit. The cutter wear limit is the preset wear degree, which can be set according to the specific situation.

The milling motor drives the milling rotor to rotate, and the torque information of the milling motor can show the load of the milling rotor during the milling operation process. In the normal operation process, the load values of different cutter areas are approximate. That is, the difference between corresponding torque values is small, so that the torque variability amount in different cutter areas can show the wear degree of the milling cutter. Along the periphery of the milling rotor, the milling cutter located at the same angle corresponds to the same section on the operation pavement. Generally, the wear degree of the milling cutter in the same cutter area is approximate.

In this embodiment, the torque information can be directly obtained through the milling motor, and the wear state of different cutter areas on the milling rotor can be determined without special detection equipment, which can significantly reduce costs and is conducive to applying to the existing milling machine.

In addition, since the number of milling cutters on the milling rotor is large, the milling rotor is divided into different cutter areas along the periphery of the milling rotor, and the cutter area is used as the detection unit for detecting the wear state. On the one hand, the torque data of different milling cutters in the same cutter area can be used for synthesis analysis, to prevent the data of a single milling cutter from being affected by the outside world and avoid data distortion, thereby effectively improving the accuracy of the detection results. On the other hand, the amount of the data to be processed can be greatly reduced, which is conducive to improving the efficiency of analyzing and processing data.

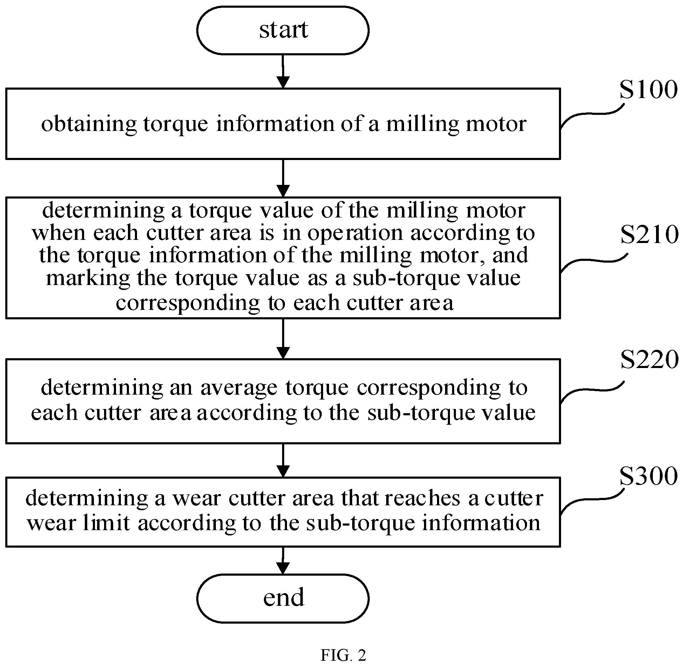

In an embodiment of the present application, as shown in FIG. 2, the method for detecting the milling cutter includes following operations.

Operation S100, obtaining torque information of a milling motor.

Operation S210, determining a torque value of the milling motor when each cutter area is in operation according to the torque information of the milling motor, and marking the torque value as a sub-torque value corresponding to each cutter area.

Operation S220, determining an average torque corresponding to each cutter area according to the sub-torque value.

Operation S300, determining a wear cutter area that reaches a cutter wear limit according to the sub-torque information.

The milling rotor and the milling motor are in a transmission connection, and the milling rotor includes a plurality of cutter areas distributed sequentially along a periphery of the milling rotor.

In this embodiment, the operation S200 in the above embodiment has been improved. In the operation S210, after the torque information of the milling motor is obtained, the torque information is analyzed and divided into the torque value of the milling motor when each cutter area is in operation. In addition, the torque value is matched with the corresponding cutter area, and the torque value is marked as the sub-torque value corresponding to each cutter area. In the operation S220, the average torque corresponding to each cutter area is calculated and served as the sub-torque information of each cutter area, and as a basis for determining the wear state of the cutter area.

Since the wear degree of the milling cutter in the same cutter area is approximate, the average torque is used as the sub-torque information that determines the wear degree of the cutter area. Even though data distortion is caused by individual milling cutter due to external factor interference, the impact on the final detection results is limited, which can effectively improve the accuracy of the detection results.

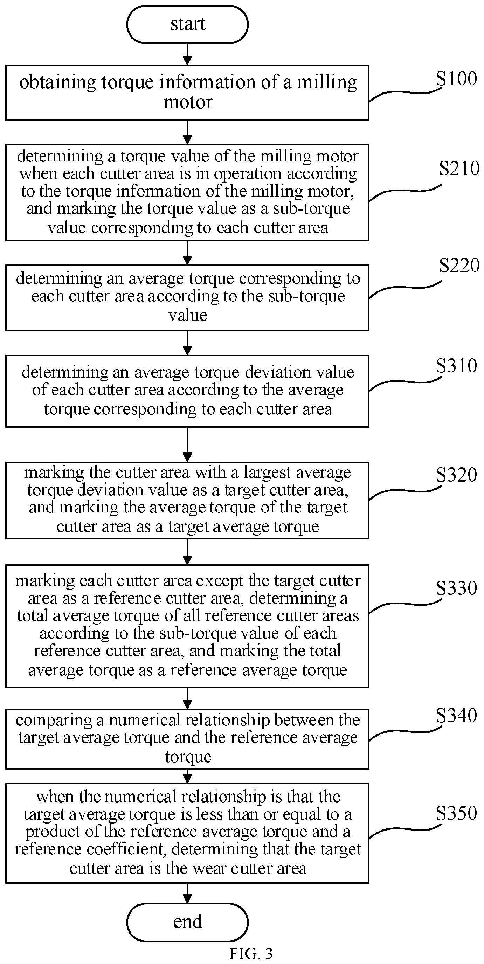

In an embodiment of the present application, as shown in FIG. 3, the method for detecting the milling cutter includes following operations.

Operation S100, obtaining torque information of a milling motor.

Operation S210, determining a torque value of the milling motor when each cutter area is in operation according to the torque information of the milling motor, and marking the torque value as a sub-torque value corresponding to each cutter area.

Operation S220, determining an average torque corresponding to each cutter area according to the sub-torque value.

Operation S310, determining an average torque deviation value of each cutter area according to the average torque corresponding to each cutter area.

Operation S320, marking the cutter area with a largest average torque deviation value as a target cutter area, and marking the average torque of the target cutter area as a target average torque.

Operation S330, marking each cutter area except the target cutter area as a reference cutter area, determining a total average torque of all reference cutter areas according to the sub-torque value of each reference cutter area, and marking the total average torque as a reference average torque.

Operation S340, comparing a numerical relationship between the target average torque and the reference average torque.

Operation S350, when the numerical relationship is that the target average torque is less than or equal to a product of the reference average torque and a reference coefficient, determining that the target cutter area is the wear cutter area.

The milling rotor and the milling motor are in a transmission connection, and the milling rotor includes a plurality of cutter areas distributed sequentially along a periphery of the milling rotor. The reference coefficient is greater than 0 and less than 1.

In this embodiment, the operation S300 in the above embodiment has been improved, and the operation S300 includes operations S310 to S350. First of all, in the operation S310, the average torque is used as the basic data in each cutter area for calculating the average torque deviation value (such as a variance, a standard difference). Then, in the operation S320, the cutter area with the largest average torque deviation value is selected as a target cutter area. The target cutter area is the most severely wear cutter area in all cutter areas. The average torque of the target cutter area is marked as the target average torque, serving as the basis for determining the wear state in the following. In the operation S330, other cutter areas except the target cutter area are marked as the reference cutter areas, serving as the comparison group. The total average torque of all reference cutter area is calculated and used as the reference average torque, serving as the comparison group data. In operations S340 and S350, the target average torque and the reference average torque are compared to determine the numerical relationship between the target average torque and the reference average torque. If the target average torque ≤ (a × the reference average torque), a is the preset reference coefficient and 0 <a < 1, it means that the wear degree of the target cutter area has reached the preset wear limit, so that the target cutter area can be determined as the wear cutter area.

Under normal circumstances, the wear degree of different cutter areas on the milling rotor is approximate, and the torque difference corresponding different cutter areas during milling operation process is small. When the milling cutter is worn, the torque of the milling motor will be reduced during the milling operation process. After the wear degree of one cutter area reaches the preset wear limit, the average torque corresponding to the cutter area will have a significant deviation. In addition, the parameter a can be set according to the usage requirements of the milling cutters with different specifications.

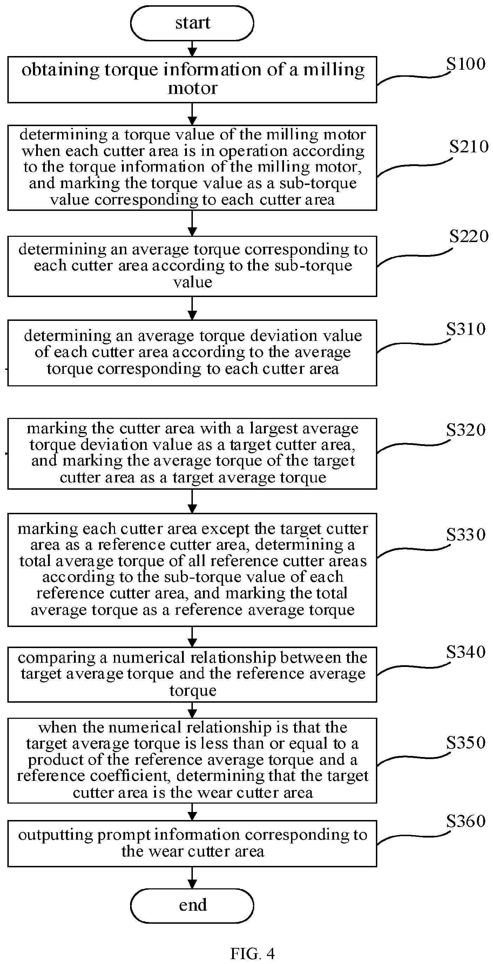

In an embodiment of the present application, as shown in FIG. 4, the method for detecting the milling cutter includes following operations.

Operation S100, obtaining torque information of a milling motor.

Operation S210, determining a torque value of the milling motor when each cutter area is in operation according to the torque information of the milling motor, and marking the torque value as a sub-torque value corresponding to each cutter area.

Operation S220, determining an average torque corresponding to each cutter area according to the sub-torque value.

Operation S310, determining an average torque deviation value of each cutter area according to the average torque corresponding to each cutter area.

Operation S320, marking the cutter area with a largest average torque deviation value as a target cutter area, and marking the average torque of the target cutter area as a target average torque.

Operation S330, marking each cutter area except the target cutter area as a reference cutter area, determining a total average torque of all reference cutter areas according to the sub-torque value of each reference cutter area, and marking the total average torque as a reference average torque.

Operation S340, comparing a numerical relationship between the target average torque and the reference average torque.

Operation S350, when the numerical relationship is that the target average torque is less than or equal to a product of the reference average torque and a reference coefficient, determining that the target cutter area is the wear cutter area.

Operation S360, outputting prompt information corresponding to the wear cutter area.

The milling rotor and the milling motor are in a transmission connection, and the milling rotor includes a plurality of cutter areas distributed sequentially along a periphery of the milling rotor. The reference coefficient is greater than 0 and less than 1.

In this embodiment, the operation S360 is added after the operation S350 of the above embodiment. After the target cutter area is determined as the wear cutter area that reaches the cutter wear limit, the prompt information corresponding to the wear cutter area is output in the operation S360, to remind the operator of the milling machine. Then the operator can timely understand the information of the wear cutter area to facilitate the subsequent maintenance or replacement of the wear cutter area, which can prevent the milling cutter in the wear cutter area from operating sequentially and affecting the operation quality of the milling machine. The prompt information includes at least one of image information, text information, sound information, and indicator light information. Correspondingly, the inform device for outputting prompt information can be provided at the milling machine, and the inform device includes but not limited to the display device, the sound output device, and the indicator light device.

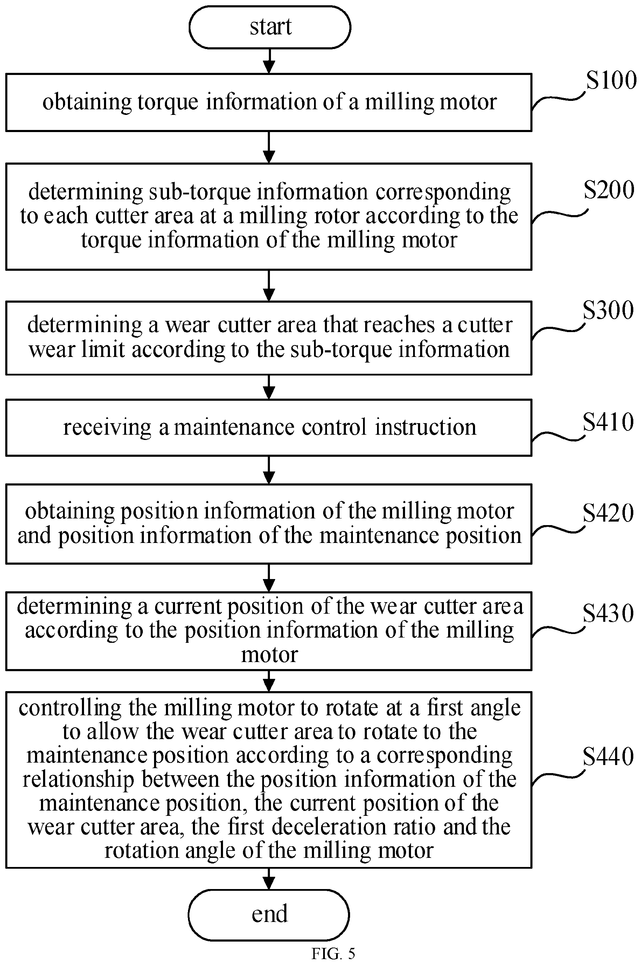

In an embodiment of the present application, as shown in FIG. 5, the method for detecting the milling cutter includes following operations.

Operation S 100, obtaining torque information of a milling motor.

Operation S200, determining sub-torque information corresponding to each cutter area at a milling rotor according to the torque information of the milling motor.

Operation S300, determining a wear cutter area that reaches a cutter wear limit according to the sub-torque information.

Operation S410, receiving a maintenance control instruction.

Operation S420, obtaining position information of the milling motor and position information of the maintenance position.

Operation S430, determining a current position of the wear cutter area according to the position information of the milling motor.

Operation S440, controlling the milling motor to rotate at a first angle to allow the wear cutter area to rotate to the maintenance position according to a corresponding relationship between the position information of the maintenance position, the current position of the wear cutter area, the first deceleration ratio and the rotation angle of the milling motor.

The milling machine is provided with the milling rotor and the milling motor, and the milling rotor and the milling motor are in the transmission connection. The deceleration ratio between the milling motor and the milling rotor is the first deceleration ratio. The milling rotor includes a plurality of cutter areas distributed sequentially along a periphery of the milling rotor, and the milling rotor is provided with a preset maintenance position.

In this embodiment, the operations S410 to S440 are added after the operation S300 of the above embodiment. After the target cutter area is determined as the wear cutter area that reaches the cutter wear limit, to facilitate subsequent maintenance or replacement, the wear cutter area needs to be adjusted to the position convenient for operation. Therefore, the preset maintenance position can be set on the milling rotor. The maintenance position can be set in the position of the front lower side of the milling rotor. The milling rotor is exposed at this position, which is convenient for operation. In operations S410 and S420, when the maintenance control instruction is received, the position information (it can be understood as the phase information of the output shaft of the milling motor) of the milling motor can be obtained. Since the milling rotor and the milling motor are in the transmission connection, in the operation S430, the current position of the wear cutter area can be determined according to the corresponding relationship between the milling rotor and the milling motor. In the operation S440, the rotation angle of the milling motor, namely the first angle, can be determined when the wear cutter area rotates to the maintenance position according to a corresponding relationship between the position information of the maintenance position, the current position of the wear cutter area, the first deceleration ratio and the rotation angle of the milling motor. The milling motor is controlled to rotate at the first angle, and the wear cutter area rotates to the maintenance position, so that the milling cutter in the wear cutter area will be exposed to facilitate maintenance or replacement operations of the operator.

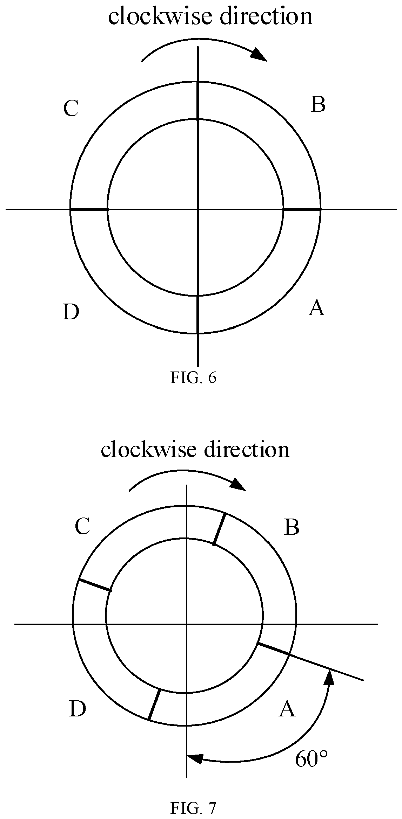

For example, as shown in FIG. 6, along the periphery of the milling rotor, the milling rotor is divided into four cutter areas: A, B, C, and D, and each cutter area covers a 90° range of the periphery of the milling rotor. The state shown in FIG. 6 is the initial state, and the position of the A area in FIG. 6 is the maintenance position.

During the operation process of the milling rotor, the current state of the milling rotor is shown in FIG. 7. If the B area is determined as the wear cutter area according to the detection results, the milling rotor needs to rotate at the angle of 90° in the clockwise direction to make the B area rotate to the maintenance position according to the current position of the wear cutter area and the position information of the maintenance position. If the A area is determined as the wear cutter area according to the detection results, the milling rotor needs to rotate at the angle of 30° in the counterclockwise direction to make the A area rotate to the maintenance position according to the current position of the wear cutter area and the position information of the maintenance position. According to the following formula: the rotation angle of the milling motor = the rotation angle of the milling rotor × the first deceleration ratio, the first angle that the milling motor needs to rotate can be calculated. In addition, according to the following formula: the revolution number of the milling motor = the rotation angle of the milling motor / 360°, the revolution number of the milling motor can be calculated. The milling motor is controlled to rotate at the first angle or the corresponding revolution number to make the wear cutter area rotate to the maintenance position.

It should be noted that the number of cutter areas and the area range are not limited to the embodiments of the present application, and can be set according to the actual situation and use needs. For example, the number of cutter areas can be any number greater than or equal to 2.

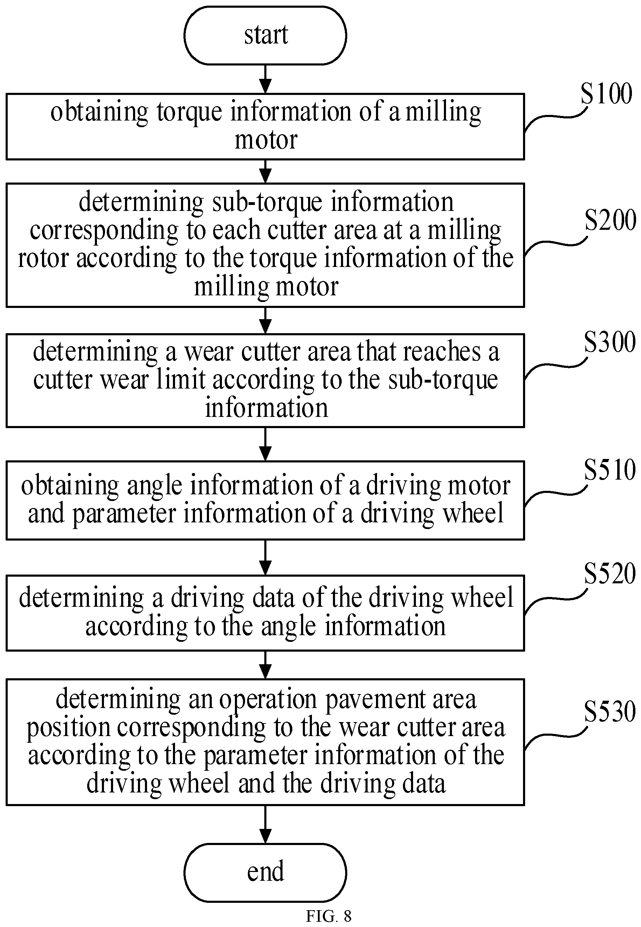

An embodiment of the present application provides a method for detecting the milling cutter applied in the milling machine. The milling machine is provided with the milling rotor, the milling motor, the driving wheel and the driving motor. The milling rotor and the milling motor are in the transmission connection, and the driving wheel and the driving motor are in the transmission connection. As shown in FIG. 8, the method for detecting the milling cutter includes following operations.

Operation S100, obtaining torque information of a milling motor.

Operation S200, determining sub-torque information corresponding to each cutter area at a milling rotor according to the torque information of the milling motor.

Operation S300, determining a wear cutter area that reaches a cutter wear limit according to the sub-torque information.

Operation S510, obtaining angle information of a driving motor and parameter information of a driving wheel.

Operation S520, determining a driving data of the driving wheel according to the angle information.

Operation S530, determining an operation pavement area position corresponding to the wear cutter area according to the parameter information of the driving wheel and the driving data.

The milling rotor and the milling motor are provided at a milling machine, and the milling machine is provided with the driving motor and the driving wheel. The driving motor and the driving wheel are in the transmission connection. The milling rotor includes a plurality of cutter areas distributed sequentially along a periphery of the milling rotor.

In this embodiment, the operations S510 to S530 are added after the operation S300 of the above embodiment. After determining the wear cutter area, it can be determined that the operation quality of the operation pavement area corresponding to the wear cutter area does not meet the construction requirements, which needs to re-operate. Therefore, the operation pavement area corresponding to the wear cutter area needs to be identified. In operations S510 and S520, the angle information of the driving motor can be obtained, and the driving data of the driving wheel can be determined according to the angle information of the driving motor, as a data basis. In the operation S530, the operation pavement area position corresponding to the wear cutter area can be determined.

In the technical solutions of the embodiments, the operation pavement area position of the wear cutter area can be accurately identified and the operation area where the operation quality does not meet the construction requirements can be positioned in time, which can facilitate the operator to carry out remedial measures or re-construction operation in time and is conducive to improving the working efficiency and the working quality of the milling machine.

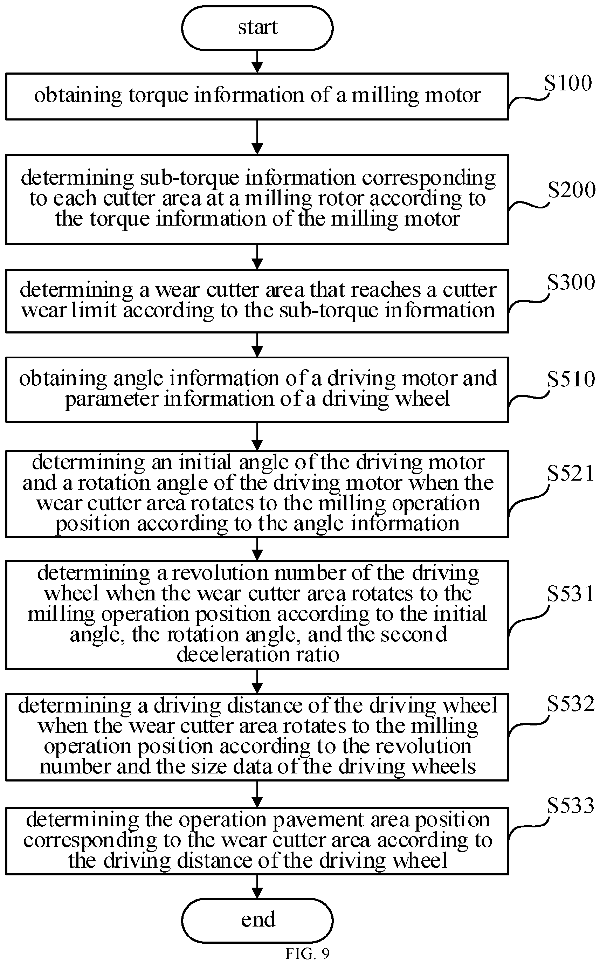

An embodiment of the present application provides a method for detecting the milling cutter applied in the milling machine. The milling machine is provided with the milling rotor, the milling motor, the driving wheel and the driving motor. The milling rotor and the milling motor are in the transmission connection, and the driving wheel and the driving motor are in the transmission connection. The deceleration ratio between the driving wheel and the driving motor is the second deceleration ratio. As shown in FIG. 9, the method for detecting the milling cutter includes following operations.

Operation S100, obtaining torque information of a milling motor.

Operation S200, determining sub-torque information corresponding to each cutter area at a milling rotor according to the torque information of the milling motor.

Operation S300, determining a wear cutter area that reaches a cutter wear limit according to the sub-torque information.

Operation S510, obtaining angle information of a driving motor and parameter information of a driving wheel.

Operation S521, determining an initial angle of the driving motor and a rotation angle of the driving motor when the wear cutter area rotates to the milling operation position according to the angle information.

Operation S531, determining a revolution number of the driving wheel when the wear cutter area rotates to the milling operation position according to the initial angle, the rotation angle, and the second deceleration ratio.

Operation S532, determining a driving distance of the driving wheel when the wear cutter area rotates to the milling operation position according to the revolution number and the size data of the driving wheels.

Operation S533, determining the operation pavement area position corresponding to the wear cutter area according to the driving distance of the driving wheel.

The milling rotor includes a plurality of cutter areas distributed sequentially along a periphery of the milling rotor. The parameter information of the driving wheel includes the size data of the driving wheel and the second deceleration ratio between the driving wheel and the driving motor.

In this embodiment, the operations S520 and S530 are improved on the basis of the above embodiments. After obtaining the angle information of the driving motor and the parameter information of the driving wheel, in the operation S521, an initial angle of the driving motor can be determined according to the angle information of the driving motor, and the rotation angle of the driving motor can be determined when the wear cutter area rotates from the initial position to the milling operation position. The milling operation position is the position that the cutter area starts to contact with the operation pavement. Since the driving motor and the driving wheel are in the transmission connection, there is a corresponding relationship between the rotation angle (or the revolution number) of the driving motor and the rotation angle (or the revolution number) of the driving wheel. In the operation S531, according to the following formula: the revolution number of the driving wheel = (the rotation angle of the driving motor - the initial angle of the driving motor) / (360° × the second deceleration ratio), the revolution number of the driving wheel can be calculated when the wear cutter area rotates from the initial position to milling operation position. After that, in the operation S532, according to the following formula: the driving distance of the driving wheel = the revolution number of the driving wheel × the perimeter of the driving wheel, the driving distance of the driving wheel when the wear cutter area rotates from the initial position to the milling operation position. In the operation S533, the operation pavement area position corresponding to the wear cutter area can be determined according to the driving distance of the driving wheel, which is conducive to carrying out remedial measures or re-construction operations.

It should be noted that the perimeter of the driving wheel can be obtained according to the size data of the driving wheel. When the driving wheel is a circular tire, the size data of the driving wheel can be calculated based on the circular perimeter formula. Of course, the driving wheel can also be a crawler type wheel, or have other structures, and the driving distance of the driving wheel can be obtained through the corresponding relationship between the driving motor and the driving wheel.

In the aforementioned embodiments, the different operations in the method for detecting the milling cutter can be combined with each other. For example, after the operation S300, the method for detecting the milling cutter can also include operations S410 to S440, and operations S510 to S530, so that a plurality of functions can be achieved simultaneously, and beneficial effects can be obtained.

A specific embodiment of the method for detecting the milling cutter of the present application is described in the following.

The present application provides the method for detecting the milling cutter applied to the milling machine. The milling machine is provided with a milling rotor, a milling motor, a driving wheel and a driving motor. The milling rotor and the milling motor are in the transmission connection, and the driving wheel and the driving motor are in the transmission connection. The deceleration ratio between the milling rotor and the milling motor is the first deceleration ratio, and the deceleration ratio between the driving motor and the driving wheel is the second deceleration ratio.

As shown in FFIG. 4, FIG. 5, and FIG. 9, the method for detecting the milling cutter includes following operations.

Operation S100, obtaining torque information of a milling motor.

Operation S210, determining a torque value of the milling motor when each cutter area is in operation according to the torque information of the milling motor, and marking the torque value as a sub-torque value corresponding to each cutter area.

Operation S220, determining an average torque corresponding to each cutter area according to the sub-torque value.

Operation S310, determining an average torque deviation value of each cutter area according to the average torque corresponding to each cutter area.

Operation S320, marking the cutter area with a largest average torque deviation value as a target cutter area, and marking the average torque of the target cutter area as a target average torque.

Operation S330, marking each cutter area except the target cutter area as a reference cutter area, determining a total average torque of all reference cutter areas according to the sub-torque value of each reference cutter area, and marking the total average torque as a reference average torque.

Operation S340, comparing a numerical relationship between the target average torque and the reference average torque.

Operation S350, when the numerical relationship is that the target average torque is less than or equal to a product of the reference average torque and a reference coefficient, determining that the target cutter area is the wear cutter area.

Operation S360, outputting prompt information corresponding to the wear cutter area.

Operation S410, receiving a maintenance control instruction.

Operation S420, obtaining position information of the milling motor and position information of the maintenance position.

Operation S430, determining a current position of the wear cutter area according to the position information of the milling motor.

Operation S440, controlling the milling motor to rotate at a first angle to allow the wear cutter area to rotate to the maintenance position according to a corresponding relationship between the position information of the maintenance position, the current position of the wear cutter area, the first deceleration ratio and the rotation angle of the milling motor.

Operation S510, obtaining angle information of a driving motor and parameter information of a driving wheel.

Operation S521, determining an initial angle of the driving motor and a rotation angle of the driving motor when the wear cutter area rotates to the milling operation position according to the angle information.

Operation S531, determining a revolution number of the driving wheel when the wear cutter area rotates to the milling operation position according to the initial angle, the rotation angle, and the second deceleration ratio.

Operation S532, determining a driving distance of the driving wheel when the wear cutter area rotates to the milling operation position according to the revolution number and the size data of the driving wheels.

Operation S533, determining the operation pavement area position corresponding to the wear cutter area according to the driving distance of the driving wheel.

The milling rotor includes a plurality of cutter areas distributed sequentially along a periphery of the milling rotor, and the milling rotor is provided with a preset maintenance position. The parameter information of the driving wheel includes the size data of the driving wheel and the second deceleration ratio between the driving wheel and the driving motor. The reference coefficient is greater than 0 and less than 1.

In the method for detecting the milling cutter of this embodiment, not only the self-device of the milling machine can be used to detect the wear cutter area in the milling rotor that has reached the cutter wear limit, and no additional detection device is required, but also the accuracy switching between different cutter areas can be performed, so that the wear cutter area can rotate to the maintenance position, and the operators can carry out the maintenance operations or the cutter replacement operations. In addition, the operation pavement area corresponding to the wear cutter area can be accurately identified in the operated pavement, so that the operators can take remedial measures timely and accurately, or can carry out the milling operation again, to reduce the impact on the construction operation quality.

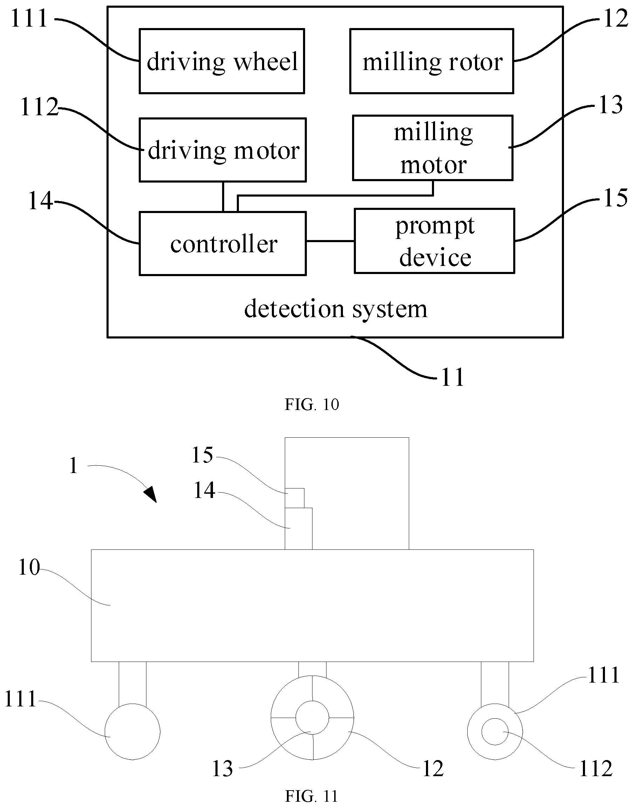

Some embodiments of the present application provide a detection system for executing the method for detecting the milling cutter of any one embodiment as mentioned above. As shown in FIG. 10 and FIG. 11, the detection system 11 includes a driving wheel 111, a driving motor 112, a milling rotor 12, a milling motor 13, a controller 14 and an inform device 15.

The driving wheel 111 and the driving motor 112 are in the transmission connection, and the driving wheel 111 is driven by the driving motor 112. The milling rotor 12 and the milling motor 13 are in the transmission connection, and the milling rotor 12 is driven by the milling motor 13 to rotate and perform milling operations. The milling rotor 12 includes a plurality of cutter areas distributed sequentially along a periphery of the milling rotor 12. The inform device 15 is used to output prompt information, and the prompt information includes at least one of image information, text information, sound information, and indicator light information. Correspondingly, the inform device 15 includes but not limited to the display device, the sound output device, the indicator light device. The controller 14 communicates with the inform device 15, the driving motor 112 and the milling motor 13, to control the inform device 15, the driving motor 112 and the milling motor 13 to operate and execute the method for detecting the milling cutter of any one embodiment as mentioned above. In this way, the wear cutter area on the milling rotor 12 that reaches the cutter wear limit can be identified, and the operator can carry out the cutter maintenance operations or the cutter replacement operations in the wear cutter wear timely, to prevent the impact on the construction operation quality.

Taking the application in the milling machine 1 as an example, as shown in FIG. 11, the driving wheel 111, the driving motor 112, the milling rotor 12, the milling motor 13, the controller 14, and the inform device 15 are set at the milling machine body 10 of the milling machine 1. Driven by the driving motor 112, the driving wheel 111 drives the milling machine body 10 to move, and drives the milling rotor 12 to move with the car. In addition, the milling motor 13 drives the milling rotor 12 to rotate, thereby achieving continuous milling operations on the operation pavement.

In this embodiment, the milling cutter on the milling rotor 12 is divided into different cutter areas, and the accurate switching between different cutter areas can be achieved through the high precision control of the milling motor 13. To facilitate the observation of the cutter wear, the milling rotor 12 can be provided with a single-cycle rotation, so that maintenance personnel can observe and record. For example, as shown in FIG. 6, the milling rotor 12 is divided into four cutter areas: A, B, C, D. The boundary point between the A area and the D area is used as the zero point, every 360° rotation of the milling rotor 12 is defined as one circle, the controller 14 will count again every one circle rotation, and the motor angle at that time is recorded.

In addition, the detection system 11 in this embodiment should have all the beneficial effects of the method for detecting the milling cutter of any one embodiment as mentioned above, which will not be repeated here.

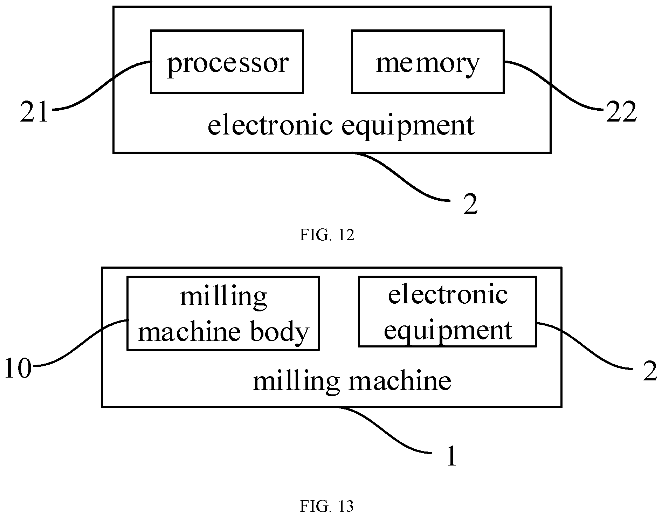

Some embodiments of the present application provide an electronic equipment 2. As shown in FIG. 12, the electronic equipment 2 includes a processor 21 and a memory 22. A computer program is stored in the memory 22 and executable on the processor 21. When the computer program of the memory 22 is executed by the processor 21, the operations of the method for detecting the milling cutter of any one embodiment as mentioned above can be implemented. The electronic equipment 2 can also include the communication interface and the communication bus. The processor 21, the communication interface, and the memory 22 communicate with each other through the communication bus. The electronic equipment 2 in this embodiment should have all the beneficial effects of the method for detecting the milling cutter of any one embodiment as mentioned above, which will not be repeated here.

The computer program of the memory 22 in the above embodiment can be implemented in the form of software functional units. When the computer program is implemented and used as an independent product in the form of software functional units, the computer program can be stored in a computer-readable storage medium. Based on this understanding, the essence of technical solutions in the present application or the part contributed to the related art or the part of the technical solutions can be reflected in the form of software products. The computer software product is stored in a storage medium, and includes several instructions to enable a computer equipment (which may be a personal computer, a server, or a network equipment, etc.) to execute all or part of the operations of the method for controlling the cutter of a construction machine in various embodiments of the present application. The aforementioned storage medium include the U disk, the mobile hard disk, the read-only memory (ROM), the random access memory (RAM), the magnetic disk or the optical disk, and other medium that can store program codes.

An embodiment of the present application further provides a readable storage medium, and a computer program is stored in the readable storage medium. When the computer program is executed by a processor, the operations of the method for detecting the milling cutter of any one embodiment as mentioned above is implemented. Therefore, the readable storage medium in this embodiment should have all the beneficial effects of the method for detecting the milling cutter of any one embodiment as mentioned above.

Some embodiments of the present application further provides a milling machine 1.

In a practicable implementation of the milling machine 1, as shown in FIG. 10 and FIG. 11, the milling machine 1 includes a milling machine body 10 provided with a detection system 11 of any one embodiment as mentioned above, so that the method for detecting the milling cutter can be executed by the detection system 11. Therefore, the wear cutter area of the milling rotor 12 that has reached the cutter wear limit can be identified. The milling machine 1 in this embodiment should have all the beneficial effects of the detection system 11 of any one embodiment as mentioned above.

In another practicable implementation of the milling machine 1, as shown in FIG. 13, the milling machine 1 includes the milling machine body 10, and the electronic equipment 2 of any one embodiment as mentioned above, or the readable storage medium of any one embodiment as mentioned above. The method for detecting the milling cutter can be executed by the electronic equipment 2, or the computer program in the readable storage medium can be executed by other processors, so that the wear cutter area of the milling rotor 12 that has reached the cutter wear limit can be identified. The milling machine 1 in this embodiment should have all the beneficial effects of the electronic equipment 2 or the readable storage medium of any one embodiment as mentioned above.

In the present application, it can be understood that the flowchart or any process or method description described in other ways can include one or more modules, fragments or portions of the code of the executable instructions in the operations for implementing specific logical functions or operations.

The scope of the preferred embodiments of the present application includes alternative implementations in which functions may be achieved in a substantially simultaneous manner or in reverse order, without the order that is shown or discussed and includes the functions involved, and the embodiments of the present application should be understood by those skilled in the art.

The logic and/or operations described in the flowchart or other ways, such as the sequence table of the executable instruction for achieving the logical function, can be embodied in any computer-readable medium for an instruction execution system, devices, or equipments (such as a computer-based system, a system including a processor, or other system that can read and execute instructions from the instruction execution system, the device, or the equipment) to use, or operate with the instruction execution system, the device, or the equipment. For the present application, the "computer-readable medium" may be any device that can include, store, communicate, propagate or transmit a program, so that the instruction execution system, the device, or the equipment can operate or in conjunction with the instruction execution system, the device, or the equipment. More specific examples (non-exhaustive list) of the computer-readable medium include the following: the electrical connection portion (the electronic device) with one or more wires, the portable computer disk case (the magnetic device), the random access memory (RAM), the read-only memory (ROM), the erasable and programmable read only memory (EPROM or the flash memory), the Fiber Optic Device, and the portable compact disc read only memory (CDROM). In addition, the computer-readable medium may even be the paper on which the program may be printed or other suitable medium, as the program can be obtained electronically, for example by optical scanning of paper or other medium, followed by editing, interpretation or, if necessary, processing in another suitable manner, and then storing the program in a computer memory.

It should be understood that various parts of the present application may be implemented in hardware, software, firmware or a combination thereof. In the embodiments described above, various operations or methods may be implemented by software or firmware stored in memory and executed by a suitable instruction execution system. For example, if operations or methods are implemented in hardware, as in another embodiment, operations or methods can be implemented by any one or combination of the following solutions known in the art: discrete logic circuits having logic gates for implementing logic functions on data signals, application-specific integrated circuits with suitable combinational logic gates, programmable gate arrays (PGAs), field programmable gate arrays (FPGAs), and the like. Those skilled in the art can understand that all or part of operations or methods of the above embodiments can be achieved by instructing related hardware through a program, and the program can be stored in a computer-readable storage medium. When the program is executed, the embodiment including the method can be executed and the operations can be combined. In addition, each functional unit in each embodiment of the present application may be integrated into one processing module, or each unit may exist separately physically, or two or more units may be integrated into one module. The above-mentioned integrated modules can be implemented in the form of hardware or in the form of software function modules. If the integrated modules are implemented in the form of software function modules and sold or used as independent products, the integrated modules can also be stored in a computer-readable storage medium. The storage medium mentioned above may be a read-only memory, a magnetic disk or an optical disk, and the like.

The above-mentioned embodiments are only preferred embodiments of the present application, and are not intended to limit the scope of the present application. Modifications or conversion can be made for those skilled in the art. Any equivalent conversion, equivalent conversion, improvement made within the principles of the present application should all fall in the scope of the present application.

## Claims

1. A method for detecting a milling cutter, **characterized by** comprising:
operation S100, obtaining torque information of a milling motor;
operation S200, determining sub-torque information corresponding to each cutter area at a milling rotor according to the torque information of the milling motor; and
operation S300, determining a wear cutter area that reaches a cutter wear limit according to the sub-torque information,
wherein the milling rotor and the milling motor are in a transmission connection, and the milling rotor comprises a plurality of cutter areas distributed sequentially along a periphery of the milling rotor.

2. The method for detecting the milling cutter according to claim 1, wherein the operation S200, determining the sub-torque information corresponding to each cutter area at the milling rotor according to the torque information of the milling motor comprises:
operation S210, determining a torque value of the milling motor when each cutter area is in operation according to the torque information of the milling motor, and marking the torque value as a sub-torque value corresponding to each cutter area; and
operation S220, determining an average torque corresponding to each cutter area according to the sub-torque value.

3. The method for detecting the milling cutter according to claim 2, wherein the operation S300, determining the wear cutter area that reaches the cutter wear limit according to the sub-torque information comprises:
operation S310, determining an average torque deviation value of each cutter area according to the average torque corresponding to each cutter area;
operation S320, marking the cutter area with a largest average torque deviation value as a target cutter area, and marking the average torque of the target cutter area as a target average torque;
operation S330, marking each cutter area except the target cutter area as a reference cutter area, determining a total average torque of all reference cutter areas according to the sub-torque value of each reference cutter area, and marking the total average torque as a reference average torque;
operation S340, comparing a numerical relationship between the target average torque and the reference average torque; and
operation S350, when the numerical relationship is that the target average torque is less than or equal to a product of the reference average torque and a reference coefficient, determining that the target cutter area is the wear cutter area,
wherein the reference coefficient is greater than 0 and less than 1.

4. The method for detecting the milling cutter according to claim 3, further comprising:
operation S360, outputting prompt information corresponding to the wear cutter area, wherein the prompt information comprises at least one of image information, text information, sound information, and indicator light information.

5. The method for detecting the milling cutter according to claim 1, wherein:
the milling rotor is provided with a preset maintenance position, and a deceleration ratio between the milling motor and the milling rotor is a first deceleration ratio; and
the method for detecting the milling cutter further comprises:
operation S410, receiving a maintenance control instruction;
operation S420, obtaining position information of the milling motor and position information of the maintenance position;
operation S430, determining a current position of the wear cutter area according to the position information of the milling motor; and
operation S440, controlling the milling motor to rotate at a first angle to allow the wear cutter area to rotate to the maintenance position according to a corresponding relationship between the position information of the maintenance position, the current position of the wear cutter area, the first deceleration ratio and the rotation angle of the milling motor.

6. The method for detecting the milling cutter according to any one of claims 1 to 5, further comprising:
operation S510, obtaining angle information of a driving motor and parameter information of a driving wheel;
operation S520, determining a driving data of the driving wheel according to the angle information; and
operation S530, determining an operation pavement area position corresponding to the wear cutter area according to the parameter information of the driving wheel and the driving data,
wherein the milling rotor and the milling motor are provided at a milling machine, and the milling machine is provided with the driving motor and the driving wheel, the driving motor and the driving wheel being in the transmission connection.

7. The method for detecting the milling cutter according to claim 6, wherein:
a deceleration ratio between the driving motor and the driving wheel is a second deceleration ratio;
the operation S520, determining the driving data of the driving wheel according to the angle information comprises:
operation S521, determining an initial angle of the driving motor and a rotation angle of the driving motor when the wear cutter area rotates to a milling operation position according to the angle information; and
the operation S530, determining the operation pavement area position corresponding to the wear cutter area according to the parameter information of the driving wheel and the driving data comprises:
operation S531, determining a revolution number of the driving wheel when the wear cutter area rotates to the milling operation position according to the initial angle, the rotation angle, and the second deceleration ratio;
operation S532, determining a driving distance of the driving wheel when the wear cutter area rotates to the milling operation position according to the revolution number and the size data of the driving wheels; and
operation S533, determining the operation pavement area position corresponding to the wear cutter area according to the driving distance of the driving wheel,
wherein the parameter information of the driving wheel comprises the size data of the driving wheel and the second deceleration ratio.

8. A detection system, for executing the method for detecting the milling cutter according to any one of claims 1 to 7, **characterized by** comprising:
a driving wheel, a driving motor, a milling rotor, a milling motor, a controller and an inform device,
the driving wheel and the driving motor are in a transmission connection,
the milling rotor and the milling motor are in the transmission connection,
the milling rotor comprises a plurality of cutter areas distributed sequentially along a periphery of the milling rotor, and
the controller communicates with the inform device, the driving motor and the milling motor, to control the inform device, the driving motor and the milling motor to operate.

9. An electronic equipment, **characterized by** comprising:
a processor; and
a memory,
wherein a computer program is stored in the memory and executable on the processor, when the computer program is executed by the processor, the operations of the method for detecting the milling cutter according to any one of claims 1 to 7 are implemented.

10. A milling machine, **characterized by** comprising a milling machine body, wherein the milling machine body is provided with the detection system according to claim 8 or the electronic equipment according to claim 9.

11. A readable storage medium, wherein a computer program is stored in the readable storage medium, and the computer program is executed by a processor to implement the operations of the method for detecting the milling cutter according to any one of claims 1 to 7.
